Europäisches Patentamt

European Patent Office

Office européen des brevets

(19)

(11) Veröffentlichungsnummer: **0 263 937**
**A2**

(12) **EUROPÄISCHE PATENTANMELDUNG**

(21) Anmeldenummer: 87111483.1

(22) Anmeldetag: 07.08.87

(51) Int. Cl.⁴: **B23Q 15/00** , B23Q 5/00

(30) Priorität: 18.09.86 DE 3631793

(43) Veröffentlichungstag der Anmeldung:
20.04.88 Patentblatt 88/16

(84) Benannte Vertragsstaaten:
AT BE CH DE FR GB IT LI LU NL SE

(71) Anmelder: Siemens Aktiengesellschaft Berlin
und München
Wittelsbacherplatz 2
D-8000 München 2(DE)

(72) Erfinder: Stephan, Jürgen-Dieter, Dipl.-Ing.
Zweigstrasse 4
D-8080 Emmering(DE)
Erfinder: Bär, Jürgen
Hochwaldstrasse 7
D-8000 München 70(DE)

(54) Schaltungsanordnung zur Erfassung von Signalen zur Steuerung von Fertigungsabläufen und Maschinen.

(57) Um eine maschinen-oder werkzeugspezifische Auswertung von Signalen, insbesondere Schallemissionssignalen, zu erreichen, werden nach der Erfindung Bauelemente zur Auswertung digitalisierter Signale auf einer einzigen Flachbaugruppe untergebracht und die aus dem Auswerteprozeß entstandenen Entscheidungskriterien (zum Beispiel Grenzwertüberschreitung) in Signale zur Steuerung eines Prozesses oder einer Maschine umgewandelt und ausgegeben.

FIG 1

## Schaltungsanordnung zur Erfassung von Signalen zur Steuerung von Fertigungsabläufen und Maschinen.

Die Erfindung betrifft eine Schaltungsanordnung zur Erfassung und Auswertung aller einkanalig in Frequenzen umwandelbaren Signale zur automatischen Steuerung von Fertigungsabläufen und Maschinen. Unter Signalen sind zum Beispiel Schallemissionssignale und alle analogen Signale eines Fertigungsprozesses zu verstehen.

Seit der Entwicklung von numerischen Steueranlagen werden verschiedene Werkzeugmaschinen vollautomatisch betrieben. Da bei solchen Werkzeugmaschinen die Steuersignale für einen vorbestimmten Vorschub oder Schnitt nach vorbestimmten Programmen automatisch an Arbeits-bzw. Werkstücktische oder Werkzeugträger angelegt werden, werden die Schneid-oder Spanabhebvorgänge auch im Fall von beschädigten oder abgenutzten Werkzeugen weitergeführt, so daß Ausschuß erzeugt wird.

In der DE-OS 2 557 428 ist eine Vorrichtung zur augenblicklichen Feststellung einer Beschädigung eines Schneidwerkzeuges im Verlauf eines Schneid-bzw. Spanabhebevorgangs beschrieben und dargestellt. Diese Vorrichtung besteht aus einem Detektor zur Erzeugung eines Ausgangssignals entsprechend der Schwingung eines Schneidwerkzeugs oder eines durch dieses bearbeiteten Werkstückes, ferner einer Signalverarbeitungsschaltung und einer Einrichtung zum Vergleichen des Ausgangssignals von der Signalverarbeitungsschaltung mit einem vorbestimmten Bezugswert. Die Signalverarbeitungsschaltung hat eine Mittelwertschaltung zur Erzielung des quadra tischen Mittelwertes des Ausgangssignales des Detektors. Die Vergleichseinrichtung weist einen Komparator zum Vergleichen des Ausgangssignales einer Normal-oder Solldatenspeicherschaltung mit dem Ausgangssignal der Signalverarbeitungsschaltung auf.

Diese und weitere bekannte Vorrichtungen sind für die Mehrzahl der Anwendungsfälle beim Schneiden (Drehen, Fräsen, Bohren, Stanzen) ungeeignet, weil sie als Überwachungseinrichtung zu träge reagieren. Außerdem sind sie nicht für komplexe Bearbeitungsvorgänge anwendbar bzw. erfordern sie einen zu hohen apparativen Aufwand und können daher nur in Spezialfällen Anwendung finden.

Derzeit besteht demnach keine Möglichkeit, mit vertretbarem Aufwand die Schallemissionsanalyse in die Fertigungsautomatisierung einzubeziehen. Es fehlen sowohl kostengünstige als auch flexible Systeme, die die Körperschallauswertung vornehmen und Statussignale, zum Beispiel an Maschinensteuerungen, weitergeben.

Der Erfindung liegt die Aufgabe zugrunde, eine Schaltungsanordnung gemäß dem Oberbegriff zu konzipieren und damit die Möglichkeit zu schaffen, wie an einem Ausführungsbeispiel erläutert, die Schallemissionsanalyse in die Fertigungsautomatisierung einzubeziehen.

Diese Aufgabe wird gemäß dem Kennzeichen des Anspruchs 1 gelöst. Der Vorteil dieser Lösung besteht darin, daß durch die kompakte Bauweise eine wesentliche Reduzierung der Gerätekosten und die Auswertung und Bewertung der eingehenden Daten softwaregesteuert erfolgt. Dadurch ist ein flexibler Einsatz für eine Vielzahl von Anwendungen möglich.

Nach einer Weiterbildung der Erfindung erfolgt die Bewertung der eingehenden Daten interruptgesteuert. Dadurch ist es möglich, die Peripherieeinheiten noch aus reichend schnell zu bedienen und die eingehenden Daten vollständig zu verarbeiten.

Nach einer weiteren Ausgestaltung der Erfindung steuert der Single-Chip-Mikrocomputer mit Dekodierungs-und Verzögerungsgliedern ein LCD-Display an, wobei der µ-Prozessor weiterhin mit seiner vollen Taktfrequenz von 12 MHz betrieben wird. Diese besondere Ansteuerung der Peripherieeinheiten ermöglicht den Einsatz einfacher und kostengünstiger Anzeigelemente LED und LCD.

Der Single-Chip-Mikrocomputer weist eine Anzahl von Portleitungen auf, die durch aktive Kodierung von der Prozessorseite ein Maximum an Tasten einer Tastatur anschließen läßt (zum Beispiel 20 Tasten an fünf Portleitungen). Durch die Verlagerung der Auswertetechnik in softwaregesteuerte Bewertung ist es möglich, mit wenigen Tastenfunktionen auszukommen.

Im Rahmen der Erfindung sind die Bauelemente teilweise übereinander (Huckepackausführung) angeordnet. Die Integrationsdichte der Baugruppe ist die Voraussetzung, daß die gesamte Schaltungsanordnung nur einen minimalen Raum einnimmt und von einem Single-Chip-Mikrocomputer betrieben werden kann.

Gemäß der Erfindung ist der Aufbau vorzugsweise auf einer Europakarte realisiert. Der Vorteil dieses Aufbaus besteht darin, daß ein Einbau in einfachsten Maschinensteuerungen möglich wird, ohne eigene Busverdrahtungen realisieren zu müssen.

Für eine Daten-und Werkzeugbank sind gemäß der Erfindung non-volatile Speicher EEPROM's oder gepufferte C-MOS-RAM'2 vorgesehen. Dieser Aufbau eines Daten-und Werkzeugspeichers ermöglicht es, wiederkehrende Probleme, wie Werkzeugwechsel oder Serienprüfungen, auf Tastendruck erneut ohne Eingabe von Daten zu starten.

Im Rahmen der Erfindung sind durch die Verwendung von Zwischenspeichern und Dekodierungsbausteinen die non-volatilen Speicher, der Programmspeicher, der Datenspeicher und die externen Schnittstellen gleichzeitig ansteuerbar. Der Entwurf spezieller Dekodierungen ermöglicht das gleichzeitige Ansteuern mehrerer Peripherieeinheiten, womit eine erhöhte Datensicherung erreicht und das Ausfallrisiko vermindert wird.

Die Dekodierung durch Programmsteuerung aus dem Single-Chip-Mikrocomputer schaltet bei zu schneller Datenfolge prioritätsgesteuert einzelne Peripherieeinheiten ab. Sollte nämlich aus nicht vorhersehbaren Gründen die Datenmenge im laufenden Überwachungsprozeß so ansteigen, daß bei der vorgegebenen Konfiguration kein vollständiger Betrieb mehr möglich ist, werden als nicht wesentlich erkannte Funktionen abgeschaltet, um das Hauptziel der Maschinen-und Prozeßüberwachung aufrechtzuerhalten.

Die Erfindung wird anhand der Figuren erläutert. Es zeigen:

Figur 1 eine Schaltungsanordnung zur Auswertung von Schallemissionsdaten,

Figur 2 ein Anwendungsbeispiel zur Prozeßüberwachung mit Schallemission und

Figur 3 ein Beispiel der Signalverarbeitung in sechs Skizzen

a = Sensorsignal,
b = aufbereitetes Signal,
c = aufbereitetes Signal mit Bewertungslinienzug,
d = digitalisiertes Signal,
e = bewertetes und digitalisiertes Signal und
f = Impulsfrequenz des bewerteten und digitalisierten Signals.

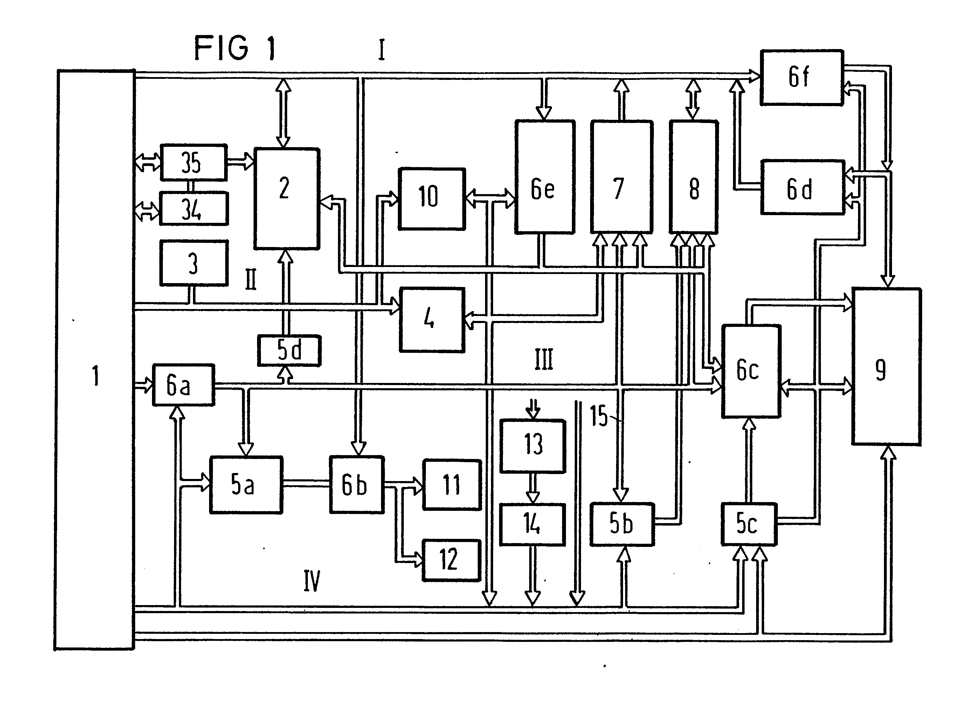

Am linken Rand der Figur 1 ist mit 1 ein Single-Chip-Mikrocomputer (zum Beispiel SAB 8051, 8032 oder dergleichen) dargestellt, an den über eine Taktaufbereitung 35 zur Synchronisation ein LCD-Display 2 (zum Beispiel EA-X40017AR), eine Tastatur 3 zur Eingabe von Steuerparametern und ein Drucker 4 (zum Beispiel Datamega MP182) über bidirektionale Port-Ausgänge, die als gemultiplexte Busse I-IV verwendet werden, angeschlossen sind. Diese Ausgänge sind über Dekodierbausteine 5a - 5d (PROM) und Verzögerungsglieder und über Zwischenspeicherungen 6a - 6f (Latch) so angeschaltet, daß Speicherbausteine EPROM 7, RAM 8 und EEPROM oder CMOSRAM 9 mit einer begrenzten Anzahl von Leitungen angesteuert werden können. Schnittstellen 10 (V24), 11 (Centronics) sind ebenfalls über Ein-und Ausgänge des Mikrocomputers ansteuerbar. Eine Zusatzanzeige 12, zum Beispiel eine LED-Anzeige, stellt digitale Signale für Alarmmeldungen zur Verfügung. Die auszuwertenden Schallemissionssignale kommen über einen digitalen Eingang 13 und werden in einem variablen Frequenzteiler 14 (zum Beispiel 74LS193) aufbereitet. Ein weiterer Dateneingang 15 ist als Trigger zur Auswertung und Interrupt-Steuerung vorgesehen. Mit 34 ist die Resetlogik und mit 35 die Taktversorgung bezeichnet.

Der Funktionsablauf geht folgendermaßen vor sich:

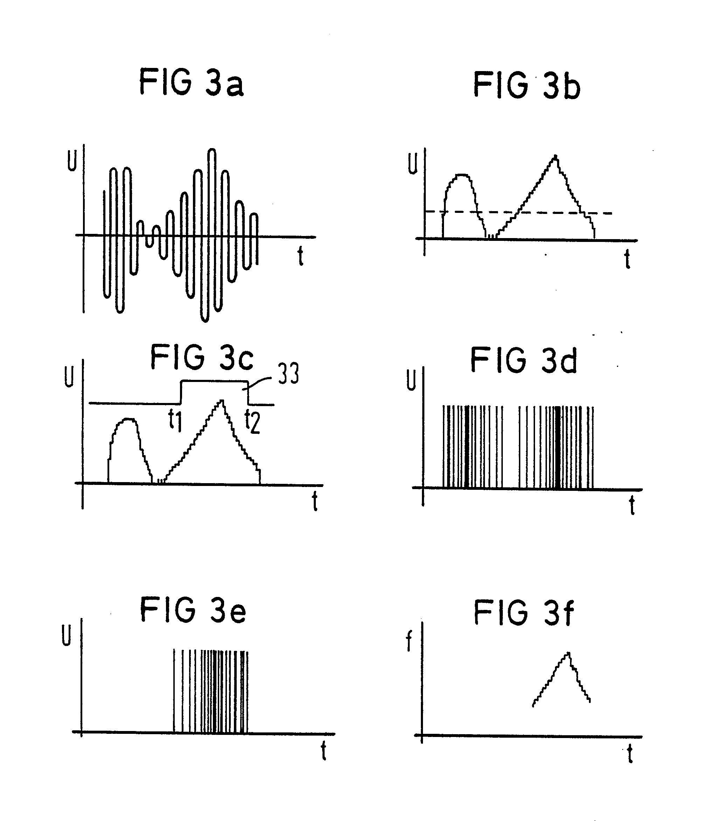

Die am Eingang 13 von einer Schallemissionsaufbereitung ankommenden Daten (Frequenzimpulse) (Figur 3d) werden zusätzlich in einem variablen Frequenzteiler aufbereitet und dann einem Zähler im Single-Chip-Mikrocomputer 1 zugeführt. Diese Frequenzimpulse werden nach Maßgabe (Bewertung oder Startsignal) der externen Triggerung 15 (Figur 3c) oder softwaregesteuert bewertet. Wird der Auswertebereich programmgesteuert vorgegeben, so dient der Trigger 15 nur zur Synchronisation mit dem zu überwachenden Vorgang, zum Beispiel Zugversuch oder Werkzeugüberwachung. Unter Bewertung ist zu verstehen, daß nur der Abschnitt der Daten gezählt wird, die im Auswertebereich (Fenster) liegen (Figur 3f). Dieses Fenster (Figur 3c) kann durch den externen Trigger 15 oder durch Software im Single-Chip-Mikrocomputer 1 nach programmierten Kriterien festgelegt werden. Die im EPROM-Speicher 7 oder im Mikrocomputer 1 selbst resident hinterlegten Programme werden durch einen Menü-geführten Eintrag über die Tastatur 3 so mit Auswertekriterien (zum Beispiel Dauer des Versuchs, verwendetes Werkzeug, Bestimmung des Auswertefensters und Anzahl der Messungen, Alarmkriterien etc.) versehen, daß im Programmablauf zum Beispiel ein Soll/Istwertvergleich stattfinden kann.

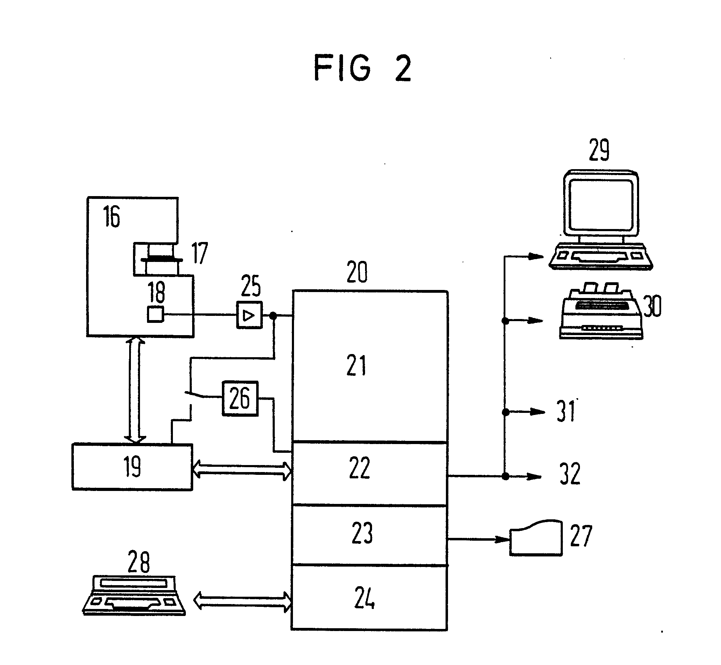

Eine mögliche Verwendung des Gerätes ist in der Figur 2 an einem Ausführungsbeispiel für "Schneiden"schematisch dargestellt, das noch im einzelnen erläutert wird. Weitere Anwendungen sind aber zur Überwachung von Stanzwerkzeugen, Schweißparametersteuerung, Low Cost Schallemissionsanalyse, Langzeitpegelüberwachung, Intelligente SEA im Labor, Überwachung bei spanender Bearbeitung, flexibler Prototyp für Fertigungsautomaten, Signalauswertung von beliebigen Analogwerten (Einplatinencomputer) usw. denkbar.

Im RAM-Zwischenspeicher 8 werden alle vom Mikrocomputer 1 in eine Zahl umgesetzten Werte vom Eingang 13 gepuffert. Die Auswertung dieser Daten erfolgt nach den vorgegebenen Kriterien (Festlegung des Fensters, Anzahl der schon ausgeführten Messungen, Anzahl von Grenzwertüberschreitungen etc.) aus den Speichern 7 und 9. Nur relevante Daten (Ergebnisse aus der Bewertung, Extremwerte) werden im nicht flüchtigen Speicher 9 abgespeichert. Unter relevanten Daten sind zum Beispiel eine Grenzwertüberschreitung zu verstehen, wobei zum Beispiel eine Zuordnung zum Prozeß mit abgespeichert wird. Die relevanten Daten sind auch der zuletzt erfaßte Betriebszustand vor dem Ausschalten des Gerätes.

Eine mögliche Aufbereitung eines Signals zu verarbeit baren Impulsen zeigt Figur 3a bis 3f. In 3a ist ein hochfrequentes analoges Signal (Maschinenschwingung oder Körperschallsignal von Bruchvorgängen) dargestellt und in 3b deren niederfrequente Einhüllende mit einem Schwellwert, der an einer Stelle überschritten wird. Die Figur 3c veranschaulicht die Bewertung in einem Fenster. Zwischen 3c und 3d erfolgt zum Beispiel eine Amplitudenfrequenzumwandlung, wobei die Höhe der Frequenz proportional zur Amplitude des analogen Signals ist. Figur 3f zeigt das bewertete, digitalisierte Signal. Die im Zähler des Single-Chip-Mikrocomputers 1 erfaßten Zahlenwerte repräsentieren somit ein Maß für das Sensorsignal im Auswertebereich.

Grenzwertüberschreitungen (Figur 3b) können durch Vorgabe eines maximalen Zählerstandes pro Zeiteinheit überwacht werden und bei Überschreitung pro Auswertefenster zur Ausgabe einer Alarmmeldung an der digitalen Schnittstelle 11 und 12 führen. Die Schnittstelle 11 ist beispielsweise eine Centronicsschnittstelle zur Steuerung von Maschinen.

Alle verarbeiteten Daten können über eine serielle Schnittstelle 10, (V24 bzw. RS 232), an Fremdsysteme (Rechner, Drucker, Betriebsdatenerfassungssysteme) weitergeleitet werden (Figur 2). Zur Protokollierung ist zusätzlich die Anbringung eines seriellen Einbaudruckers möglich.

Ein Ausführungsbeispiel zeigt Figur 2. In dieser Figur ist mit 16 eine Maschine, zum Beispiel eine Zugprüfmaschine, bezeichnet. Das zu prüfende Bauteil ist mit 17 und ein Körperschallsensor mit 18 gekennzeichnet. Hinter der Maschine 16 befindet sich die zugehörige Maschinensteuerung 19.

In der Mitte der Figur 2 ist ein Analysegerät 20 angedeutet, das die erfindungsgemäße Anordnung entsprechend Figur 2 und einen Signalformer 21 zur Aufbereitung der Schallemissionsdaten enthält. Die Untergruppenkommunikation 22, Optionen 23 und Ein/Ausgabe 24 sind Bestandteile des Analysegerätes.

Zum Anschluß des Sensors 18 an den Signalformer 21 ist ein Vorverstärker 25 vorgesehen. Ein Trigger-oder Synchronisationssignal (Dateneingang 15) wird zum Beispiel mit einem Schwellwertdetektor 26 aus dem verstärkten analogen Sensorsignal oder aus der Maschinensteuerung 19 abgeleitet.

Bei dem Verstärker handelt es sich um eine übliche Operationsverstärkerschaltung. Mit 27 ist der bereits erwähnte optional anschließbare, serielle Einbaudrucker (Datamega MP182) bezeichnet. Ein Bedienfeld 28 ist mit der Ein/Ausgabe 24 verbunden. Dieses Bedienfeld enthält die Tastatur 3, das Display 2 und die LED-Anzeige 12.

Im rechten Drittel der Figur 2 sind an die V24-Schnittstelle (Fig. 1, 10) optional anschließbare Geräte für die Ausgabe, Dokumentation, Weiterverarbeitung der Daten angedeutet, und zwar ist 29 eine Recheneinheit, 30 ein Drucker, 31 eine Datenfernübertragung und 32 eine Betriebsdatenerfassung.

Dieser Überwachungseinrichtung sind folgende Signale zuzuordnen:

Nach dem Verstärker 25 erscheint das Signal entsprechend Figur 3a. Das Bewertungssignal aus 3c tritt nach dem Schwellwertdetektor 26 auf. Der Signalformer 21 nimmt das Sensorsignal nach Figur 3a und 3b auf und übergibt an den Eingang 13 der Mikroprozessorschaltung nach Figur 1 ein digitales Signal 3d. Bei einer Grenzwertüberschreitung erfolgt zum Beispiel über die Centronicsschnittstelle 11 eine Beeinflussung der Steuerung 19.

Das Sensorsignal nach Figur 3a entsteht zum Beispiel bei einem Zugversuch. Der Bereich bis t1 in der Figur 3c kennzeichnet die auftretenden Schwingungen bis zum Beginn des Zugversuchs. Der Bereich bis t2, in dem das Auswertefenster 33 (Figur 3c) gesetzt ist, kennzeichnet den Bereich erhöhter Bruchdehnung. Verstärkte Schallemission in diesem Bereich deutet zum Beispiel auf einen bevorstehenden Bruch hin, den das Analysegerät 20 anzeigen kann bzw. dokumentiert.

Eine ähnliche Signalverarbeitung kann auf Bearbeitungsvorgänge, Stanzen oder Schneiden, übertragen werden. Dem Analysegerät könnte beispielsweise auch das schon aufbereitete Signal zugeführt werden, das dann zum Beispiel einen Kraftverlauf repräsentieren kann.

Ebenso ist ein Einsatz dieses Gerätes an anderen Werkzeugmaschinen möglich, wenn aus dem Bearbeitungsvorgang ein typisches Werkzeug-oder Maschinenverhalten abgeleitet werden kann (Pressen, Dreh-und Fräsmaschinen etc.).

**Ansprüche**

1. Schaltungsanordnung zur Erfassung und Auswertung aller einkanalig in Frequenzen umwandelbaren Signale zur automatischen Steuerung von Fertigungsabläufen und Maschinen, **dadurch gekennzeichnet**, daß ein digitaler Eingang (13), der durch eine externe Steuerung (26) oder durch programmgesteuerte Vorgabe (1) mit einem Bewertungsfenster (33) versehen wird, vorgesehen ist, an den sich ein Single-Chip-Mikrocomputer (1) anschließt, der mit seinen Ein-und Ausgängen die Kontrolle über die angeschlossenen Peripherieeinheiten (Speichergruppen 7 bis 9, Anzeige 2, 12, Tastatur 3, externe Schnittstellen 10, 11) übernimmt und eine programmgesteuerte Bewertung der eingehenden Daten durchführt, daß ferner Steuerbausteine (5a - 5d) zur Dekodierung und Adressenzwischenspeicherung (6a - 6f) zur Ansteuerung der nachgeschalteten Bausteine angeordnet sind.

2. Schaltungsanordnung nach Anspruch 1, **dadurch gekennzeichnet** , daß die Bewertung der eingehenden Daten (13) interrupt-gesteuert erfolgt.

3. Schaltungsanordnung nach Anspruch 1, **dadurch gekennzeichnet**, daß der Single-Chip-Mikrocomputer (1) mit Dekodierungs-und Verzögerungsgliedern (5a - 5d) ein LCD-Display (2) ansteuert und mit seiner vollen Taktfrequenz von 12 MHz betrieben wird.

4. Schaltungsanordnung nach Anspruch 1, **dadurch gekennzeichnet**, daß der Single-Chip-Mikrocomputer (1) eine Anzahl von Portleitungen aufweist, die durch aktive Kodierung von der Prozessorseite mit einem Maximum an Tasten der Tastatur (3) verbunden sind (zum Beispiel 20 Tasten an fünf Portleitungen).

5. Schaltungsanordnung nach Anspruch 1, **dadurch gekennzeichnet**, daß die Bauelemente teil weise übereinander (Huckepack-Ausführung) angeordnet sind.

6. Schaltungsanordnung nach Anspruch 5, **dadurch gekennzeichnet**, daß der Aufbau vorzugsweise auf einer Europakarte realisiert ist.

7. Schaltungsanordnung nach Anspruch 1, **dadurch gekennzeichnet**, daß für eine Daten-und Werkzeugbank non-volatile Speicher (9) EEPROM's oder gepufferte C-MOS-RAM's vorgesehen sind.

8. Schaltungsanordnung nach Anspruch 7, **dadurch gekennzeichnet**, daß die Verwendung von Zwischenspeichern (6a - 6f) und Dekodierungsbausteine (5a - 5d) die non-volatilen Speicher (9), der Programmspeicher (7), die Datenspeicher (8 und 9) und die externen Schnittstellen (4, 10, 11) gleichzeitig ansteuerbar sind.

9. Schaltungsanordnung nach Anspruch 8, **dadurch gekennzeichnet**, daß die Dekodierung (5a - 5d) durch Programmsteuerung aus dem Single-Chip-Mikrocomputer (1) bei zu schneller Datenfolge prioritätsgesteuert einzelne Peripherieeinheiten (zum Beispiel 4, 10) abschaltet.

# FIG 1    I

0 263 937

# FIG 2

# FIG 3a

U

t

# FIG 3b

U

t

# FIG 3c

U

33

t1    t2

t

# FIG 3d

U

t

# FIG 3e

U

t

# FIG 3f

f

t